# EUROPÄISCHE PATENTANMELDUNG

(11) **EP 0 671 252 A1**
(43) Veröffentlichungstag der Anmeldung: **13.09.1995**
(21) Anmeldenummer: 95101273.1
(22) Anmeldetag: 31.01.1995
(51) Int. Cl.: B29C 51/46

(54) **Verfahren und Tiefzieheinrichtung zum Herstellen einer Folienschale**

(30) Priorität: 08.03.1994 DE 4407639
(71) Anmelder: Tetra Laval Convenience Food GmbH & Co. KG, 35216 Biedenkopf-Wallau (DE)
(72) Erfinder: Becker, Dipl. Ing. Gernot, D-35232 Dautphetal (DE)
(74) Vertreter: Missling, Arne, Dipl.-Ing.

(57) **Zusammenfassung**

Folienschalen für Kunststoff-Verpackungen werden zumeist aus einer ebenen Folie im Tiefziehverfahren hergestellt, wobei die Folie (21) in einer Tiefzieheinrichtung zwischen einem Ober- (11) und einem Unterteil (12) eingespannt wird. In dem Oberteil (11) ist dabei eine Druckkammer vorgesehen, deren anstehender statischer Druck die vorgewärmte Folie (21) in eine Formkammer des Unterteiles verformt. Der Verformungsdruck wird von Druckluft bereitgestellt, die aus einer Druckluftquelle (41) nach entsprechender Druckminderung gewonnen wird. Der dann relativ niedrige Verformungsdruck erfordert eine gewisse Zeit, bis er in der Druckkammer aufgebaut ist. Erfindungsgemäß wird auf eine Druckreduzierung verzichtet und damit der wesentlich höhere Druckunterschied zwischen dem Druck der Druckluftquelle und dem Verformungsdruck für einen raschen Druckaufbau verwendet. Drucksensoren (33,35) oder Zeitschaltungen vermindern unzulässige Drücke.

## Beschreibung

Die Erfindung betrifft ein Verfahren zum Herstellen einer Folienschale durch Tiefziehen aus einer flachen Folie, wobei die Folie entlang des späteren Randes der Folienschale zwischen dem Oberteil und dem Unterteil einer Tiefzieheinrichtung eingespannt wird, wobei weiterhin ein die spätere Folienschale bildender Tiefziehbereich der Folie auf die für die durch das Tiefziehen herbeigeführte Verformung erforderliche Temperatur erwärmt wird, wobei ferner ein Druckgas, dessen statischer Druck für die Verformung des Tiefziehbereiches in eine unter dem Tiefziehbereich in dem Unterteil ausgebildete Formkammer ausreicht, so lange in eine über dem Tiefziehbereich in dem Oberteil ausgebildeten Druckkammer eingespeist wird, bis der Tiefsiehbereich allseits an der Wandung der Formkammer anliegt und der statische Druck in einer Druckgas-Quelle des zugerührten Druckgases den in der Druckkammer des Oberteiles und/oder der Formkammer des Unterteiles Zulässigen Druck erreicht.

Die Erfindung betrifft außerdem eine Tiefzieheinrichtung zur Durchführung des Verfahrens, im wesentlichen bestehend aus einem Oberteil und einem Unterteil, die gegeneinander beweglich sind und an Spannflächen aneinanderstoßen, zwischen denen eine ebene Folie entlang des späteren Randes der Folienschale, einen Tiefziehbereich der Folie berandend, einspannbar ist, wobei in dem Oberteil eine Druckkammer ausgebildet ist, deren dem Unterteil zugekehrte offene Seite an die eine flache Seite des Tiefziehbereiches grenzt, und in dem Unterteil eine Formkammer ausgebildet ist, die mit ihrer dem Oberteil zugekehrten offenen Seite die andere Seite des Tiefziehbereiches umgibt, und ferner bestehend aus einer Druckgas-Quelle zur Bereitstellung eines (sekundären) Druckgases zum Aufbau eines Verformungsdruckes in der Druckkammer und einer Schnellentlüftungseinrichtung zwischen der Druckgas-Quelle und der Druckkammer.

Kunststoff-Folien werden in großem Umfang durch Tiefziehen zu Folienbeuteln oder Folienschalen verarbeitet. Dazu werden sie auf die für die Verformung erforderliche Temperatur erwärmt, entweder außerhalb der zugehörigen Tiefziehwerkzeuge oder durch eine Heizeinrichtung, die in dem Oberteil einer zweiteiligen Tiefzieheinrichtung vorgesehen ist. Der Tiefziehvorgang erfolgt mittels Druckgas, das in eine über dem eingespannten, später die Folienschale bildenden Tiefziehbereich Druckkammer einleitbar ist.

Das Druckgas wird in einer Druckgas-Quelle, zumeist einer stationären Druckgas-Ringleitung, bereitgestellt, die zumeist auch für andere pneumatische Arbeitsvorgänge zur Verfügung steht. Der statische Druck des Druckgases aus einer solchen Druckgas-Quelle ist im allgemeinen nicht auf den für das Tiefziehen erforderlichen Druck abgestimmt, der ohnehin je nach Art und Größe der zu verformenden Kunststoff-Folie bzw. deren Tiefziehbereichs unterschiedlich sein kann. In der Regel ist der zur Verfügung gestellte Druck (wesentlich) höher als der für die Verformung erforderliche und auch höher als derjenige Druck, der in der Druckkammer aus mechanischen Gründen zulässig ist. Das für die Verformung verwendete Druckgas wird deshalb zunächst in einer Druckmindereinrichtung auf den Betriebsdruck abgesenkt und anschließend in die Druckkammer geleitet.

Folienschalen werden in sehr großer Stückzahl benötigt und müssen rationell in entsprechend kurzer Zeit herstellbar sein. Es ist deshalb unvorteilhaft, daß jedesmal eine geraume Zeit vergeht, bis in der Druckkammer der erforderliche Verformungsdruck aufgebaut ist, weil die zwischen der Druckmindereinrichtung und der Druckkammer erforderlichen Druckgasleitungen und Armaturen nicht beliebig große Querschnitte aufweisen dürfen, wenn sie nicht unverhältnismäßig teuer sein sollen. Je niedriger der Verformungsdruck ist, umso länger dauert es, bis er sich in der Druckkammer aufbaut, weil die dafür erforderliche Zeit außer von dem Querschnitt der Druckgasleitung vor allem von der anstehenden Druckdifferenz abhängt. Der Verformungsdruck wird andererseits wie erwähnt von den mechanischen Gegebenheiten des Oberteiles bestimmt, das nicht für beliebig hohe Drücke auslegbar ist, so daß eine Erhöhung des Verformungsdruckes zumeist nicht möglich ist. Das Einströmen des Druckgases in die Druckkammer erfordert deshalb eine beträchtliche Zeitspanne. Die bereits auf die für die Verformung erforderliche Temperatur vorgewärmte Folie wird dabei durch das anströmende Druckgas wieder abgekühlt, so daß sie von vornherein höher vorgewärmt sein muß, als für den Tiefziehvorgang eigentlich erforderlich ist.

In den meisten Fällen wird die zu einer Folienschale verformte Folie nach ihrer Verformung an die Wandung der Formkammer in dem Unterteiles der Tiefzieheinrichtung mittels einer dort eingebauten Kühleinrichtung rückgekühlt. Um die gesamte Herstellzeit zu verkürzen, neigt man dazu, dieses Rückkühlvorgang abzukürzen. Bei der Verwendung der Folienschale zum Verpacken von Lebensmitteln ist die bei einer solchen Vorgehensweise unvermeidliche Restwärme allerdings unerwünscht, so daß die Folienschalen nicht für beliebiges Packgut einsetzbar sind. Die übliche Anwendung einer solchen Tiefzieheinrichtung in einer Verpackungslinie läßt auch keine Wartezeit zu, während der die Folienschalen "von selbst" auf Raumtemperatur abkühlen könnten.

Die Erfindung hat sich deshalb die Aufgabe gestellt, ein Verfahren zum Herstellen einer Folienschale der eingangs näher bezeichneten Art so auszubilden, daß die Herstellungszeit für eine solche Folienschale wesentlich verkürzt werden kann. Dabei soll die zugehörige Tiefzieheinrichtung in einer den Stand der Technik repräsentierenden Form verwendbar sein und durch wenige zusätzliche Bauelemente an das Verfahren anpaßbar sein.

Erfindungsgemäß wird die Aufgabe dadurch gelöst, daß das Druckgas mit dem in der Druckgas-Quelle herrschenden statische Druck in die Druckkammer des Oberteiles eingeleitet wird und spätestens beim Erreichen des in der Druckkammer zulässigen statischen Druckes die Zufuhr von Druckgas unterbrochen wird. Eine Druckmindereinrichtung wird nunmehr nicht mehr benötigt, und die normalerweise hohe Druckdifferenz zwischen dem Druck in der Druckgas-Quelle und dem zulässigen Druck in den Druckkammer sorgt in dieser für einen raschen Druckaufbau, der unterbrochen wird, sobald der erforderliche Druck erreicht worden ist. Dafür ist nur noch ein Bruchteil derjenigen Zeit erforderlich, die bei den herkömmlichen Verfahren in Kauf genommen werden muß.

Die Zufuhr des Druckgases wird vorteilhaft bereits abgeschaltet, wenn in der Druckkammer ein Verformungsdruck von einer solchen Größenordnung erreicht ist, daß eine schnelle und vollständige Ausbildung der Folienschale sichergestellt ist. Auf diese Weise kann die Taktzeit weiter verkürzt werden, weil nur noch insoweit Druckgas eingeleitet wird, daß eine ordnungsgemäße Verformung des Tiefziehbereiches erfolgt.

Um sicherzustellen, daß der Verformungsdruck während des gesamten Tiefziehvorganges in der Druckkammer ansteht, kann erfindungsgemäß vorgesehen sein, daß das Druckgas aus der Druckgas-Quelle in die Druckkammer nachgefördert wird, wenn der in der Druckkammer herrschende statische Druck absinkt, insbesondere, wenn er unter den Verformungsdruck absinkt.

Soll die Vorwärmung der Folie innerhalb der Tiefzieheinrichtung erfolgen, dann ist es zweckmäßig, wenn vor der Beaufschlagung der Druckkammer mit dem (sekundären) Druckgas zunächst die Formkammer mit einem (primären) Druckgas beaufschlagt wird, dessen Druck ausreicht, den Tiefziehbereich an eine in der Druckkammer über, vorzugsweise knapp über dem Tiefziehbereich angeordnete Heizeinrichtung anzulegen, bis die für das Tiefziehen erforderliche Temperatur der Folie erreicht ist. Durch den unmittelbaren Kontakt der Folie an der Heizeinrichtung ist nur eine kurze Vorwärmzeit erforderlich, um die Verformungstemperatur zu realisieren. Das Verfahren kann dabei so ausgestaltet sein, daß die Formkammer vor oder während des Tiefziehvorganges von dem Druck des (primären) Druckgases mit Unterstützung durch eine Vakuumpumpe entlastet wird, so daß der Verformungsdruck an der Folie voll wirksam wird.

Es ist zweckmäßig, wenn für die Druckgase oder eines der Druckgase Druckluft verwendet wird, neben den bekannten Vorteilen unter anderem auch, weil pneumatische Bauelemente in großer Auswahl kostengünstig zur Verfügung stehen und bereits bestehende Druckgas-Quellen verwendet werden können.

Weiterhin wird die Aufgabe erfindungsgemäß durch eine Tiefzieheinrichtung gelöst, bei der eine Steuereinrichtung vorgesehen ist, durch welche die Zufuhr des Druckgases aus der Druckgas-Quelle mittels einer ersten Stelleinrichtung in Abhängigkeit von dem in der Druckkammer des Oberteiles aufgebauten Druck unterbrechbar ist. Dabei ist es im einzelnen möglich, daß entweder der Druck in der Druckkammer als Regelgröße verwendet wird und dort ein erster Druck-Sensor vorgesehen ist, dessen Druck-Meßwert in die Steuereinrichtung eingebbar ist und der nach einem Sollwert-Istwert-Vergleich die Druckgas-Zufuhr in die Druckkammer über die Stelleinrichtung unterbricht oder einleitet, und/oder daß in der Steuereinrichtung eine Zeitschaltung vorgesehen ist, die nach einer beispielsweise durch Eichung gewonnenen Zeit die Druckgas-Zufuhr in die Druckkammer unterbricht. Um Fehlfunktionen zu vermeiden, können dabei mehrere, unabhängig voneinander arbeitende Meß- oder Steuerelemente vorgesehen sein.

In der Druckkammer kann eine Heizeinrichtung für den Tiefziehbereich vorgesehen sein, wobei es für einen guten Wärmeübergang besonders günstig ist, wenn die Heizeinrichtung knapp über dem zwischen den vorzugsweise flächenkongruenten, ebenen Spannflächen des Oberteiles und des Unterteiles eingespannten Tiefziehbereich angeordnet ist und an der Heizeinrichtung eine ebene Heizfläche für den Tiefziehbereich ausgebildet ist.

In ähnlicher Weise wie in Bezug auf die Druckkammer kann eine weitere Druckgas-Quelle zur Bereitstellung eines (primären) Druckgases vorgesehen sein, mit dem die Formkammer des Unterteiles beaufschlagbar ist; dabei ist es gleicherweise vorteilhaft, wenn in der Formkammer ein zweiter Druck-Sensor vorgesehen ist, dessen Druck-Meßwert in die Steuereinrichtung eingebbar ist und nach einem Sollwert-Istwert-Vergleich die Druckgas-Zufuhr in die Formkammer mittels einer zweiten Stelleinrichtung unterbricht oder einleitet. Auf diese Weise kann die Vorwärmung der Folie exakt in den gesamten Tiefziehvorgang integriert werden.

Schließlich ist es, um Restwärme in der Folienschale sicher abzuführen, günstig, wenn die Wandung der Formkammer für den verformten Tiefziehbereich mit einer Kühlung versehen ist. Selbstverständlich kann die Kühlung thermostatisiert die Kühltemperatur dem jeweiligen Tiefziehvorgang anpaßbar ausgeführt werden.

Insgesamt ist durch das erfindungsgemäße Verfahren unter Verwendung der erfindungsgemäßen Tiefzieheinrichtung nunmehr eine sehr zeit-rationelle Herstellung von Folienschalen ermöglicht, ohne daß es dazu eines Aufwandes bedürfte, der zu wesentlichen Kostenerhöhungen für die erforderlichen apparativen Einrichtungen und damit des Endproduktes führen würde, was angesichts der billig herzustellenden Folienschalen auch nicht vertretbar wäre. Das Verfahren ist außerdem auch ohne viel Aufwand bei bereits bestehenden Tiefzieheinrichtungen anwendbar, wenn diese um die angegebenen Meß- und Steuereinrichtungen erweitert werden.

An Hand der Zeichnung wird an einem Ausführungsbeispiel einer erfindungsgemäßen Tiefzieheinrichtung die Erfindung noch weiter erläutert. Es zeigen in verkürzt skizzenhafter, schematischer Darstellung
- Fig.1: eine erfindungsgemäße Tiefzieheinrichtung, bei der die Folie außerhalb dieser vorgewärmt wird, und
- Fig.2: eine Tiefzieheinrichtung wie in Fig.1, bei der aber stattdessen die Vorwärmung in die Tiefzieheinrichtung integriert ist.

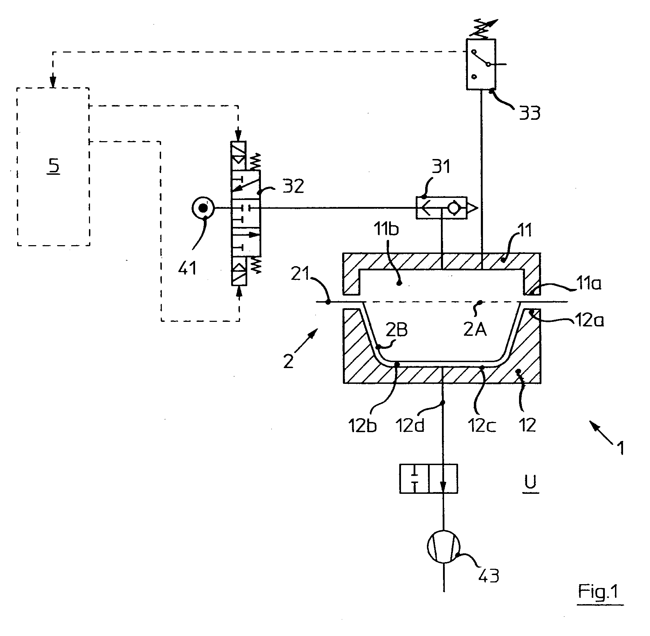

Entsprechend Fig.1 besteht eine erfindungsgemäße Tiefzieheinrichtung 1 im wesentlichen aus einem Oberteil 11 und einem Unterteil 12, die an Spannflächen 11a und 12a aneinanderstoßen, zwischen denen eine Folie 2 einspannbar ist, weil das Oberteil 1 und das Unterteil 12 relativ zueinander beweglich sind. Die Spannflächen 11a,12a scheiden dabei einen Tiefziehbereich 2A aus der Folie 2 aus, der nach dem Verformen einer Folienschale 2B zur Verpackung insbesondere von Lebensmitteln bildet, der anschließend mit Packgut verfüllbar und mittels eines mit einem Rand 21 verschweißbaren Deckels verschließbar ist.

In dem Oberteil 11 ist eine von der Spannfläche 11a umrandete Druckkammer 11b vorgesehen, die über eine Stelleinrichtung 32 mit einer sekundären Druckgas-Quelle 41 pneumatisch verbunden ist. Eine zentrale Steuereinrichtung 5 bewirkt über Stellsignale auf die Stelleinrichtung 32, daß Druckgas aus der Druckgas-Quelle 41 solange der Druckkammer 11b zugeführt wird, bis ein Druck-Sensor 33 signalisiert, daß in der Druckkammer 11b der gewünschte Druck erreicht ist. Um den Arbeitstakt der Tiefzieheinrichtung zu verkürzen, kann nach Abschluß des Verform- und Rückkühlvorganges die Druckkammer 11b über ein Schnellentlüftungsventil 31 entlüftet werden. Auch der Druck-Sensor 33 ist zweckmäßig ein pneumatisches Bauelement und entsprechend mit der Steuereinrichtung 5 verschaltet.

Die Spannfläche 12a umrandet eine in dem Unterteil 12 eingetiefte Formkammer 12b, deren Wandung 12c so geformt ist, daß die Folie 2 unter dem an dem Tiefziehbereich 2A anstehenden Verformungsdruck die gewünschte Form der Folienschale 2B ausbildet, wenn sie an ihr zur Anlage kommt. Die Wandung 12c kann mittels einer in der Zeichnung nicht dargestellten Kühleinrichtung gekühlt werden, um die Restwärme in der Folienschale 2B zu beseitigen. Im übrigen ist die Formkammer 12b in bekannter Weise über eine Entlüftungseinrichtung 12d mit der Umgebung U aerodynamisch verbunden oder, wie beispielhaft dargestellt, wird die Entlüftung durch eine Vakuumpumpe 43 beschleunigt und die Druckdifferenz zwischen den Kammern 11b und 12b vorteilhaft erhöht.

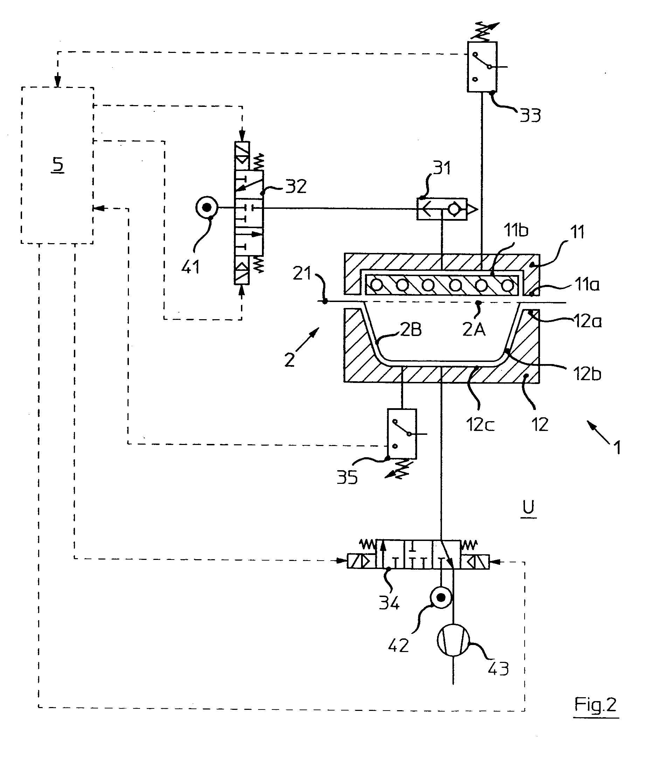

Im Unterschied dazu ist in der Ausführung der Fig.2 vorgesehen, daß die Folie 2 in der Tiefzieheinrichtung 1 selbst vorgewärmt wird, und zwar nur in dem Tiefziehbereich 2A. Zu diesem Zweck ist in der Druckkammer 11b nun noch eine Heizeinrichtung 11c vorgesehen, deren - ebene - Heizfläche 11d mit der Ebene der Spannfläche 11a ungefähr bündig oder von dieser etwas in das Innere der Druckkammer 11b zurückgesetzt ist. Eine primäre Druckgas-Quelle 42 ist mit Hilfe eines Stellventils in einer Stelleinrichtung 34 mit der Formkammer 12b pneumatisch verbindbar. Unter dem Druck der Druckgas-Quelle 42 legt sich der Tiefziehbereich 2A so lange fest an die Heizfläche 11d an, bis die Vorwärmzeit der Folie 2 erreicht ist; danach werden die Formkammer 12b wie oben beschrieben entlüftet und gleichzeitig oder kurze Zeit später der Folienschale 2B ausgeformt. Der Druck in der Formkammer 12b unterhalb der Folie 2 ist in der gezeigten Weise mittels eines mit der Steuereinrichtung 5 verschalteten weiteren Druck-Sensors 35 steuerbar. Die Steuereinrichtung 5 beeinflußt gleicherweise die Stelleinrichtung 34.

Die Erfindung ist auf das dargestellte Ausführungsbeispiel nicht beschränkt, und insbesondere kann die Tiefzieheinrichtung auch anders ausgebildet sein, ohne die Erfindung zu verlassen. So können beispielsweise auch andere als pneumatische Bausteine für Steuer- und Regelglieder verwendet werden. Die Bezeichnungen "Oberteil" und "Unterteil" sind aus praktischen Gründen gewählt, weil sie einer üblichen Aufteilung entsprechen; ihre Funktion ist nicht auf eine bestimmte Raumkonfiguration beschränkt. In ähnlicher Weise wie mittels Druck-Sensoren der Druck als Meß- und Regelgröße verwendbar ist, kann beispielsweise auch die Zeit als Steuergröße dienen.

### Aufstellung der verwendeten Bezugszeichen:

- 1: Tiefzieheinrichtung
- 11: Oberteil
- 11a: Spannfläche
- 11b: Druckkammer
- 11c: Heizeinrichtung
- 11d: Heizfläche
- 12: Unterteil 12
- 12a: Spannfläche
- 12b: Formkammer
- 12c: Wandung
- 12d: Entlüftungseinrichtung
- 2: Folie
- 2A: Tiefziehbereich
- 2B: Folienschale
- 21: Rand
- 31: Schnellentlüftung
- 32,34: Stelleinrichtung
- 33,35: Druck-Sensor
- 41,42: Druckgas-Quelle
- 5: Steuereinrichtung
- 43: Vakuumpumpe
- U: Umgebung

## Patentansprüche

1. Verfahren zum Herstellen einer Folienschale durch Tiefziehen aus einer flachen Folie, wobei
(a) die Folie entlang des späteren Randes der Folienschale zwischen dem Oberteil und dem Unterteil einer Tiefzieheinrichtung eingespannt wird,
(b) ein die spätere Folienschale bildender Tiefziehbereich der Folie auf die für die durch das Tiefziehen herbeigeführte Verformung erforderliche Temperatur erwärmt wird,
(c) ein Druckgas, dessen statischer Druck für die verformung des Tiefziehbereiches in eine unter dem Tiefziehbereich in dem Unterteil ausgebildete Formkammer ausreicht, so lange in eine über dem Tiefziehbereich in dem Oberteil ausgebildeten Druckkammer eingespeist wird, bis der Tiefziehbereich allseits an der Wandung der Formkammer anliegt und
(d) der statische Druck in einer Druckgas-Quelle des zugeführten Druckgases den in der Druckkammer des Oberteiles und/oder der Formkammer des Unterteiles zulässigen Druck überschreitet,
dadurch gekennzeichnet, daß
(e) das Druckgas mit dem in der Druckgas-Quelle (41) herrschenden statische Druck in die Druckkammer (11b) des Oberteiles (11) eingeleitet wird und
(f) spätestens beim Erreichen des in der Druckkammer (11b) zulässigen statischen Druckes die Zufuhr von Druckgas unterbrochen wird.

2. Verfahren nach Anspruch 1, dadurch gekennzeichnet, daß die Zufuhr des Druckgases abgeschaltet wird, wenn in der Druckkammer (11b) ein Verformungsdruck von einer solchen Größenordnung erreicht ist, daß eine schnelle und vollständige Ausbildung der Folienschale (2B) sichergestellt ist.

3. Verfahren nach Anspruch 1 oder 2, dadurch gekennzeichnet, daß das Druckgas aus der Druckgas-Quelle (41) in die Druckkammer (11b) nachgefördert wird, wenn der in der Druckkammer (11b) herrschende statische Druck absinkt.

4. Verfahren nach Anspruch 3, dadurch gekennzeichnet, daß das Druckgas aus der Druckgas-Quelle (41) in die Druckkammer (11b) nachgefördert wird, wenn der in der Druckkammer (11b) herrschende statische Druck unter den Verformungsdruck absinkt.

5. Verfahren nach einem der Ansprüche 1 bis 4, dadurch gekennzeichnet, daß vor der Beaufschlagung der Druckkammer (11b) mit dem (sekundären) Druckgas zunächst die Formkammer (12b) mit einem (primären) Druckgas beaufschlagt wird, dessen Druck ausreicht, den Tiefziehbereich (2A) an eine in der Druckkammer (11b) über, vorzugsweise knapp über dem Tiefziehbereich (2A) angeordnete Heizeinrichtung (11c) anzulegen, bis die für das Tiefziehen erforderliche Temperatur der Folie (2) erreicht ist.

6. Verfahren nach Anspruch 5, dadurch gekennzeichnet, daß die Formkammer (12b) vor oder während des Tiefziehvorganges von dem Druck des (primären) Druckgases entlastet wird.

7. Verfahren nach einem der Ansprüche 1 bis 6, dadurch gekennzeichnet, daß für die Druckgase oder eines der Druckgase Druckluft verwendet wird.

8. Tiefzieheinrichtung zur Durchführung des Verfahrens nach einem der Ansprüche 1 bis 7, im wesentlichen bestehend aus
(a) einem Oberteil und einem Unterteil, die gegeneinander beweglich sind und an Spannflächen aneinanderstoßen, zwischen denen eine ebene Folie entlang des späteren Randes der Folienschale, einen Tiefziehbereich der Folie berandend, einspannbar ist, wobei
(b) in dem Oberteil eine Druckkammer ausgebildet ist, deren dem Unterteil zugekehrte offene Seite an die eine flache Seite des Tiefziehbereiches grenzt, und in dem Unterteil eine Formkammer ausgebildet ist, die mit ihrer dem Oberteil zugekehrten offenen Seite die andere Seite des Tiefziehbereiches umgibt
(c) ferner bestehend aus einer Druckgas-Quelle zur Bereitstellung eines (sekundären) Druckgases zum Aufbau eines Verformungsdruckes in der Druckkammer und einer Absperreinrichtung zwischen der Druckgas-Quelle und der Druckkammer,
dadurch gekennzeichnet, daß
eine Steuereinrichtung (5) vorgesehen ist, durch welche die Zufuhr des Druckgases aus der Druckgas-Quelle (41) mittels einer ersten Stelleinrichtung (32) in Abhängigkeit von dem in der Druckkammer (11b) des Oberteiles (11) aufgebauten Druck unterbrechbar ist.

9. Tiefzieheinrichtung nach Anspruch 8, dadurch gekennzeichnet, daß der Druck in der Druckkammer (11b) als Regelgröße verwendet wird und dort mindestens ein erster Druck-Sensor (33) vorgesehen ist, dessen Druck-Meßwert in die Steuereinrichtung (5) eingebbar ist und der nach einem Sollwert-Istwert-Vergleich die Druckgas-Zufuhr in die Druckkammer (11b) über die Stelleinrichtung (32) unterbricht oder einleitet.

10. Tiefzieheinrichtung nach Anspruch 8, dadurch gekennzeichnet, daß in der Steuereinrichtung (5) mindestens eine Zeitschaltung vorgesehen ist, die nach einer beispielsweise durch Eichung gewonnenen Zeit die Druckgas-Zufuhr in die Druckkammer (11b) unterbricht

11. Tiefzieheinrichtung nach einem der Ansprüche 8 bis 10, dadurch gekennzeichnet, daß in der Druckkammer (11b) eine Heizeinrichtung (11c) für den Tiefziehbereich (2A) vorgesehen ist.

12. Tiefzieheinrichtung nach Anspruch 11, dadurch gekennzeichnet, daß die Heizeinrichtung (11c) knapp über dem zwischen den vorzugsweise flächenkongruenten, ebenen Spannflächen (11a,12a) des Oberteiles (11) und des Unterteiles (12) eingespannten Tiefziehbereich (2A) angeordnet ist.

13. Tiefzieheinrichtung nach Anspruch 12, dadurch gekennzeichnet, daß an der Heizeinrichtung (11c) eine ebene Heizfläche (11d) für den Tiefziehbereich ausgebildet ist.

14. Tiefzieheinrichtung nach einem der Ansprüche 8 bis 13, dadurch gekennzeichnet, daß eine weitere Druckgas-Quelle (42) zur Bereitstellung eines (primären) Druckgases vorgesehen, mit dem die Formkammer (12b) des Unterteiles (12) beaufschlagbar ist.

15. Tiefzieheinrichtung nach Anspruch 14, dadurch gekennzeichnet, daß in der Formkammer (12b) ein zweiter Druck-Sensor (35) vorgesehen ist, dessen Druck-Meßwert in die Steuereinrichtung (5) eingebbar ist und nach einem Sollwert-Istwert-Vergleich die Druckgas-Zufuhr in die Formkammer (12b) mittels einer zweiten Stelleinrichtung (34) unterbricht oder einleitet.

16. Tiefzieheinrichtung nach einem der Ansprüche 8 bis 15, dadurch gekennzeichnet, daß die Wandung (12c) der Formkammer (12b) für den verformten Tiefziehbereich (2A) mit einer Kühlung versehen ist.
